# EUROPÄISCHE PATENTSCHRIFT

(11) **EP 0 957 272 B1**
(45) Veröffentlichungstag und Bekanntmachung des Hinweises auf die Patenterteilung: **04.06.2003**
(21) Anmeldenummer: 99108811.3
(22) Anmeldetag: 04.05.1999
(51) Int. Cl.: F16B 5/02

(54) **Abstandshalter**
Spacer
Entretoise

(30) Priorität: 09.05.1998 DE 19820834; 22.12.1998 DE 19859234
(43) Veröffentlichungstag der Anmeldung: 17.11.1999
(73) Patentinhaber: fischerwerke Artur Fischer GmbH & Co. KG, 72178 Waldachtal (DE)
(72) Erfinder: Scholpp, Werner, 71739 Oberriexingen (DE)

(56) Entgegenhaltungen:
- DE-A- 3 524 309

## Beschreibung

Die Erfindung betrifft einen Abstandshalter nach dem Oberbegriff des Anspruchs 1 (DE 3 524 309A).

Der Abstandshalter ist zum Befestigen eines plattenförmigen Bauteils beispielsweise an einer Wand vorgesehen.

Die Befestigung plattenförmiger Bauteile wie Möbel, Regalsysteme, Wandverkleidungen oder Fußbodenaufbauten an Wänden, Decken oder Böden erfolgt üblicherweise mittels durch die Bauteile durchgesteckter Schrauben, die mittels eines Dübels in der Wand oder dgl. verankert werden. Zur Abstandsmontage können Unterlegscheiben oder Distanzhülsen auf die Schrauben aufgesetzt werden. Schwierig ist die Befestigung an unebenen Flächen. Hier wird versucht, die Unebenheiten durch Unterlage einer unterschiedlichen Anzahl von Unterlegscheiben auszugleichen. Dies ist jedoch zeitraubend und ungenau.

Der Erfindung liegt die Aufgabe zugrunde, einen Abstandshalter der eingangs genannten Art so auszubilden, daß er eine einfache Abstandsjustage ermöglicht.

Diese Aufgabe wird erfindungsgemäß durch die Merkmale des Anspruchs 1 gelöst. Der erfindungsgemäße Abstandshalter weist ein Gewinde auf, mit dem er in ein Loch oder eine sonstige Ausnehmung in dem plattenförmigen, zu befestigenden Bauteil einschraubbar ist. Durch Drehen des Abstandshalters läßt sich sein Überstand aus dem Bauteil stufenlos einstellen. Mittels einer durch den Abstandshalter durchgesteckten Schraube läßt sich das Bauteil mit dem Abstandshalter beispielsweise an einer Wand befestigen, wobei der Abstand des Bauteils von der Wand durch Drehen des Abstandshalters einstellbar ist. Dadurch lassen sich Unebenheiten der Wand problemlos ausgleichen. Das Gewinde des Abstandshalters ist beispielsweise durch Wahl eines elastischen Werkstoffs in axialer Richtung flexibel, so daß eine Gewindesteigung des Abstandshalters veränderlich ist. Durch seine Flexibilität paßt sich das Gewinde von selbst an eine Dicke des zu befestigenden Bauteils an. Der Abstandshalter hat somit außer dem Vorteil der stufenlosen Justierbarkeit des Abstands den Vorteil, daß er in Bauteile unterschiedlicher Dicke einsetz- und einschraubbar ist und sich der jeweiligen Bauteildicke selbsttätig anpaßt.

In bevorzugter Ausgestaltung der Erfindung ist das Gewinde des Abstandshalters als kernlose Wendel ausgebildet. Dies gewährleistet eine hohe Flexibilität in axialer Richtung, wodurch sich der Abstandshalter problemlos an sehr unterschiedlich dicke Bauteile problemlos anpaßt. Mit einer durch die Wendel durchgesteckten Schraube läßt sich die Wendel zusammenhalten und ein in Windungen der Wendel eingreifendes Bauteil zwischen den Windungen festspannen, wobei die zwischen der Rückseite des Bauteils und der Außenfläche der Wand befindlichen Windungen einen Abstützblock entsprechend dem eingestellten Abstand bilden.

In bevorzugter Ausgestaltung weist die Wendel einen flachen, rechteckförmigen Windungsquerschnitt auf, der ebenfalls eine hohe Flexibilität in axialer Richtung und eine gute Anlage des Bauteils an den Windungen der Wendel gewährleistet.

Bei einer Ausgestaltung der Erfindung weist der Abstandshalter einen seitlich überstehenden Abschlußbund auf, an dem er gut von Hand verdrehbar ist. An seinem Bund oder auch an anderer Stelle weist der Abstandshalter bei einer Ausgestaltung der Erfindung einen Werkzeugsitz zum Ansetzen eines Drehwerkzeugs auf. Der Werkzeugsitz kann beispielsweise ein Vier- oder Sechskant zum Ansetzen eines Gabelschlüssels oder ein Schlitz zum Ansetzen eines Schraubendrehers oder einer Münze ausgebildet sein.

Die Erfindung wird nachfolgend anhand eines in der Zeichnung dargestellten Ausführungsbeispiels näher erläutert. Es zeigen:
- Figur 1: einen erfindungsgemäßen Abstandshalter in perspektivischer Darstellung;
- Figur 2: ein Bruchstück eines zu befestigenden Bauteils;
- Figur 3: den Abstandshalter aus Figur 1 im Achsschnitt;
- Figur 4: eine Stirnansicht des Abstandshalters gemäß Pfeil IV in Figur 3; und
- Figur 5: einen Schnitt eines mit dem Abstandshalter aus Figur 1 an einer Wand befestigten Bauteils.

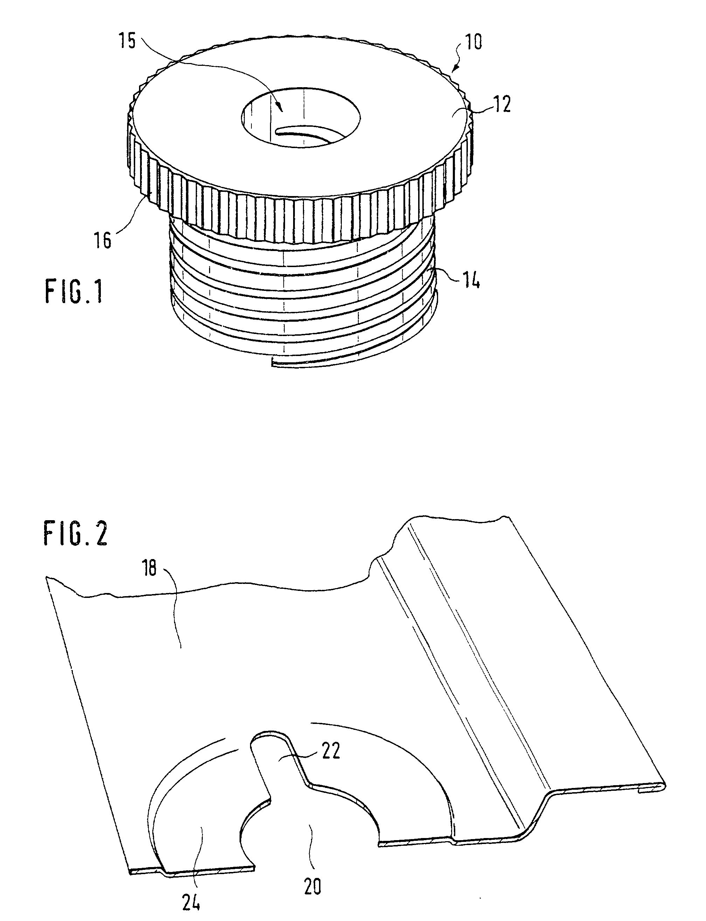

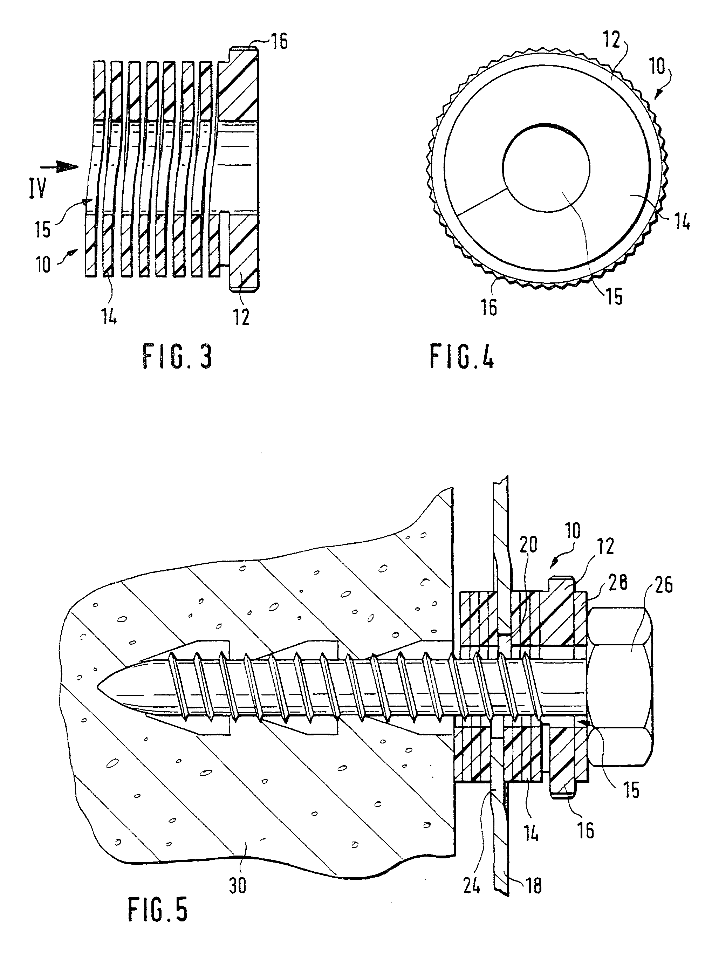

Der in Figur 1 dargestellte, erfindungsgemäße Abstandshalter 10 ist einstückig als Spritzgießteil aus Kunststoff hergestellt. Er weist einen Abschlußbund 12 mit der Form einer Lochscheibe auf, an dessen einer Stirnseite eine Wendel 14 angeordnet ist. Abschlußbund 12 und Wendel 14 sind gemeinsam in einem Arbeitsschritt einstückig miteinander gespritzt. Die Wendel 14 ist axial am Abschlußbund 12 angeordnet, sie weist einen flachen, rechteckförmigen Windungsquerschnitt auf (Figur 3). Die Wendel 14 bildet ein Gewinde des Abstandshalters 10. An einem Umfang des Abschlußbundes 12 ist ein Rändel 16 (Figur 4) angebracht, der zum Drehen des Abstandshalters 10 von Hand oder mittels eines nicht dargestellten, am Rändel 16 angreifenden Spezialwerkzeugs drehbar ist. Der Abstandshalter 10 wird von einem durch den Abschlußbund 12 und die Wendel 14 axial durchgehenden Mittelloch 15 durchsetzt.

Der Abstandshalter 10 dient zur Befestigung eines zumindest im Bereich einer Befestigungsstelle plattenförmigen Bauteils 18 aus beispielsweise Holz, Kunststoff oder, wie in Figur 2 dargestellt, aus Metall. Das Bauteil 18, das in Figur 2 abgeschnitten dargestellt ist, ist mit einem Loch 20 versehen, dessen Durchmesser kleiner als ein Außendurchmesser der Wendel 14 des Abstandshalters 10 ist. Vom Loch 20 geht ein Schlitz 22 radial ab. Das Loch 20 ist umgeben von einer in Draufsicht kreisförmigen Einprägung 24, die einen Lochrand zu einem Gewinde mit einem Gang formt, das am Schlitz 22 beginnt und endet.

Zur Befestigung des Bauteils 18 wird der Abstandshalter 10 mit seiner Wendel 14 in das Loch 20 im Bauteil 18 eingeschraubt, wobei der Schlitz 22 das Einschrauben des Abstandshalters 10 in das Loch 20 ermöglicht, auch wenn das Loch 20 vollständig vom Bauteil 18 umschlossen ist. Wie in Figur 5 dargestellt, wird eine Schraube 26 ggf. mit einer Unterlegscheibe 28 das Mittelloch 15 des Abstandshalters 10 durchgesteckt und beispielsweise in einen nicht dargestellten Dübel in einer Wand 30 eingeschraubt. Die Schraube 26 wird zunächst schwach angezogen, so daß der Abstandshalter 10 drehbar bleibt. Durch Verdrehen des Abstandshalters 10 wird ein Abstand des Bauteils 18 von der Wand 30 eingestellt und anschließend die Schraube 26 festgezogen, wodurch das Bauteil 18 im Abstandshalter 10 festgespannt und im eingestellten Abstand von der Wand 30 an dieser befestigt ist.

Windungen der Wendel 14 können, wie in Figuren 1 und 3 zu sehen, im unverformten Grundzustand einen Abstand voneinander aufweisen oder sie können im Grundzustand aneinander anliegen. Durch die Elastizität des Werkstoffs des Abstandshalters 10 läßt sich die ein Gewinde bildende Wendel 14 in axialer Richtung dehnen, wodurch sich der Abstand der Windungen der Wendel 14 und damit eine Steigung des Gewindes, das die Wendel 14 bildet, verändern. Auf diese Weise paßt sich der Abstandshalter 10 selbsttätig an die Dicke eines Bauteils 18, in das er eingeschraubt wird, an.

## Patentansprüche

1. Abstandshalter mit einem Gewinde zum Einschrauben in ein Loch oder eine sonstige Ausnehmung in einem plattenförmigen Bauteil, **dadurch gekennzeichnet, daß** das Gewinde (14) in axialer Richtung flexibel ist.

2. Abstandshalter nach Anspruch 1, **dadurch gekennzeichnet, daß** das Gewinde als kernlose Wendel (14) ausgebildet ist.

3. Abstandshalter nach Anspruch 2, **dadurch gekennzeichnet, daß** die Wendel (14) einen flachen, rechteckförmigen Windungsquerschnitt aufweist.

4. Abstandshalter nach Anspruch 1, **dadurch gekennzeichnet, daß** der Abstandshalter einen seitlich überstehenden Abschlußbund (12) aufweist.

5. Abstandhalter nach Anspruch 1, **dadurch gekennzeichnet, daß** der Abstandshalter (10) einen Werkzeugsitz (16) für ein Drehwerkzeug aufweist.

## Claims

1. Spacer having a thread for screwing into a hole or other orifice in a panel-form component, **characterised in that** the thread (14) is flexible in the axial direction.

2. Spacer according to claim 1, **characterised in that** the thread is in the form of a coreless helix.

3. Spacer according to claim 2, **characterised in that** the turns of the helix (14) have a flat, rectangular cross-section.

4. Spacer according to claim 1, **characterised in that** the spacer comprises a laterally projecting end collar (12).

5. Spacer according to claim 1, **characterised in that** the spacer (10) comprises a tool seating (16) for a turning tool.

## Revendications

1. Entretoise équipée d'un filetage destiné à être vissée dans un trou ou tout autre creux dans un élément de construction ayant la forme d'un panneau, **caractérisée en ce que** le filetage (14) est souple dans la direction axiale.

2. Entretoise selon la revendication 1, **caractérisée en ce que** le filetage est conçu comme une hélice sans noyau (14).

3. Entretoise selon la revendication 2, **caractérisée en ce que** l'hélice (14) présente une section d'enroulement plate et rectangulaire.

4. Entretoise selon la revendication 1, **caractérisée en ce que** l'entretoise présente un épaulement d'extrémité (12) faisant saillie latéralement.

5. Entretoise selon la revendication 1, **caractérisée en ce que** l'entretoise (10) présente un siège d'outil (16) pour un outil de rotation.
